# EUROPÄISCHE PATENTSCHRIFT

(11) **EP 0 581 177 B1**
(45) Veröffentlichungstag und Bekanntmachung des Hinweises auf die Patenterteilung: **02.05.1997**
(21) Anmeldenummer: 93111638.8
(22) Anmeldetag: 21.07.1993
(51) Int. Cl.: C08F 8/32, C08F 8/48

(54) **Verfahren zur Imidierung von Polymeren auf Basis von Estern der Methacryl- und Acrylsäure**
Process for the imidization of polymers based on esters of acrylic and methacrylic acid
Procédé d'imidisation de polymères à base d'esters d'acide acrylique et méthacrylique

(30) Priorität: 29.07.1992 DE 4225044
(43) Veröffentlichungstag der Anmeldung: 02.02.1994
(73) Patentinhaber: BASF Aktiengesellschaft, 67063 Ludwigshafen (DE)
(72) Erfinder: Besecke, Siegmund, Dr., D-3250 Hameln (DE); Deckers, Andreas, Dr., D-6700 Ludwigshafen (DE); Hofmann, Juergen, D-6700 Ludwigshafen (DE); Kroeger, Harald, D-6707 Schifferstadt (DE); Ohlig, Hilmar, D-6750 Kaiserslautern (DE)

(56) Entgegenhaltungen:
- EP-A- 0 200 530
- EP-A- 0 441 148
- GB-A- 2 101 139

## Beschreibung

Die Erfindung betrifft ein Verfahren zur Herstellung eines Polymerisats, enthaltend im wesentlichen Einheiten der Formel I 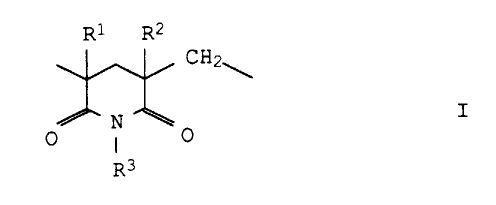 in der
- R¹ und R²: für Wasserstoff oder Methyl stehen und
- R³: C₁-C₁₈-Alkyl, C₅-C₁₂-Cycloalkyl, C₆-C₁₀-Aryl, C₆-C₁₀-Aryl-C₁-C₄-alkyl bedeutet, wobei diese Reste mit Ausnahme der C₁-C₁₈-Alkylreste bis zu dreifach mit Resten ausgewählt aus der Gruppe bestehend aus C₁-C₄-Alkyl, C₁-C₄-Alkoxy und Halogen substituiert sein können,
durch Umsetzen eines Polymeren auf Basis von C₁-C₂₀-Alkylestern der Acrylsäure, Methacrylsäure oder Mischungen davon mit Ammoniak oder einem primären Amin in einem Extruder.

Polymere auf Basis von C₁-C₂₀-Alkylestern der (Meth)Acrylsäure deren häufigste Vertreter Methylmethacrylat und Methylacrylat sind, zeichnen sich durch eine hervorragende Transparenz und Witterungsstabilität aus. Aus diesen Gründen verwendet man Polymethylmethacrylate ("PMMA") beispielsweise für die Herstellung optisch anspruchsvoller Teile wie Linsen sowie für Lampenabdeckungen.

Für eine ganze Reihe von Anwendungen besitzen solche Acrylat-Formmassen jedoch eine zu geringe Wärmeformbeständigkeit. Eine der möglichen Lösungen besteht in der Erhöhung der Glasübergangstemperatur durch polymeranaloge Umsetzung beispielsweise von PMMA mit primären Aminen (Imidierung) unter Ausbildung cyclischer Imidstrukturen (s. Gl.1):

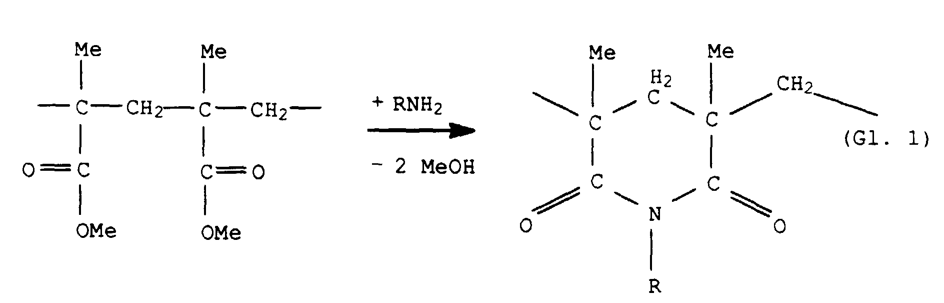

Die Imidierung von PMMA in wäßrigem Milieu führt wie bekannt (s. z.B. EP-A 376,749, S. 6, Z. 21-26) aufgrund der im Endprodukt vorhandenen freien Carboxyl-Gruppen zu einer verringerten Fließfähigkeit des Polymeren sowie zu einer erhöhten Wasseraufnahme, zu einer größeren Neigung zur Spannungsrißkorrosion und zu einer Verringerung der Bewitterungsbeständigkeit.

Die Imidierung von PMMA in wasserfreiem Milieu wird z.B. in der US-A 2,146,209 beschrieben, in der die Umsetzung in Lösungsmitteln wie Biphenyl und Diethylenglykol oder ohne Lösungsmittel durchgeführt wird. Abgesehen von der Toxizität (Biphenyl) und dem großen Aufwand die Lösungsmittel aufgrund ihrer hohen Siedepunkte zu entfernen, erhält man nach diesem Verfahren uneinheitlich imidierte Produkte mit verringerter Transparenz, einer gelben Eigenfarbe und schlechten Löslichkeit.

In der GB-A 21 01 139 wird ein Verfahren zur Herstellung von imidierten Acrylpolymeren beschrieben, bei dem ein Rohrreaktor mit Umlenkblechen als statistisches Mischelement verwendet wird.

Poly(meth)acrylimide mit verbesserten Eigenschaften, wie bessere Löslichkeit und höherer thermischer Beständigkeit, erhält man nach der Lehre der DE-A 26 52 118. In dieser Schrift wird ein Verfahren zur Umsetzung von Meth- und Acrylpolymeren mit wasserfreien Aminen auf einem Extruder bei Temperaturen von 200 bis 450°C beschrieben. Nachteilig ist hierbei, daß das erhaltene Produkt einen hohen Anteil an freien Carboxylgruppen (hohe Säurezahl) aufweist.

In der DE-A 40 02 904 wird ein Verfahren zur Herstellung von Polymethacrylimiden durch Umsetzung von Polymethylmethacrylat ("PMMA") mit primären Aminen auf einem Extruder beschrieben, wobei das Amin an verschiedenen Stellen in den Extruder eingespeist wird. Aufgrund dieser verfahrenstechnischen Maßnahme kann man ein Polymethacrylimid mit einer verringerten Säurezahl, verglichen mit dem Produkt aus der DE-A 26 52 118, herstellen.

Ähnlich verhält es sich bei dem in der US-A 4,246,374 beschriebenen Prozeß, bei dem PMMA lösungsmittelfrei auf einem Extruder imidiert wird. Jedoch bildet sich auch hier durch die hohe Reaktionstemperatur Reaktionswasser, was zu teilverseiften Polymeren mit Säurezahlen von etwa 1 Äquivalent pro Kilogramm Polymer sowie verringerter Transparenz führt. Einen weiteren Nachteil bilden Nebenprodukte wie Ether und Di- und Trialkylamine.

Bei den beschriebenen Verfahren werden Produkte erhalten, die aufgrund einer uneinheitlichen Imidierung nur ungenügende optische Eigenschaften aufweisen. Dies macht sich insbesondere in einem hohen Gelbindex und einer starken Trübung bemerkbar. Um Gelbfärbung zu beseitigen, gibt man den Formmassen sogenannte "Bläuungsmittel" bzw. optische Aufheller zu. Diese Nachbehandlung erhöht jedoch die Produkt- und Verfahrenskosten.

Der Erfindung lag daher die Aufgabe zugrunde, durch Verminderung der Inhomogenitäten bei der Imidierung von Polymeren auf Basis von C₁-C₂₀-Alkylestern der Acrylsäure, Methacrylsäure oder Mischungen davon, Produkte zur Verfügung zu stellen, die eine geringere Trübung und einen verbesserten Gelbindex aufweisen.

Demgemäß wurde ein Verfahren wie eingangs beschrieben gefunden, bei dem man den Ammoniak oder das primäre Amin mit einer Schmelze des umzusetzenden Polymeren bei einer Temperatur von unterhalb 250°C in einem Extruder intensiv unter Homogenisierung mit Hilfe von Knetblöcken oder Zahnmischelementen vermischt, bevor man die Imidierung bei einer Temperatur im Bereich von 250-350°C durchführt.

Erfindungsgemäß vermischt man den Ammoniak bzw. das Amin mit einer Schmelze eines Polymeren auf Basis von C₁-C₂₀-Alkylestern der Acrylsäure, Methacrylsäure oder Mischungen in einem Extruder mit den beschriebenen Mischelementen. Im allgemeinen können die bei einem Extruder verwendeten mischenden Elemente fördernd oder förderneutral sein.

Zweckmäßig schmilzt man das zu imidierende Polymere in an sich bekannter Weise in einem Extruder auf und führt dann Ammoniak oder ein Amin der Schmelze in ebenfalls bekannter Weise zu.

Die Temperatur während des Mischvorganges wählt man erfindungsgemäß unterhalb von 250°C, bevorzugt von 220 bis 230°C. Oberhalb von 250°C findet in der Regel eine unkontrollierte Imidierung des (Meth)Acryl-Polymeren statt, was nach den bisherigen Beobachtungen zu uneinheitlichen Poly(meth)acrylimiden ("PMI") führt.

Die Dauer des Mischens beträgt in der Regel 10 bis 100 sec. Vorteilhaft haben sich jedoch Extruder mit einem L/D-Verhältnis von 5 bis 30 erwiesen.

Besonders vorteilhaft hat sich eine Ausführungsform erwiesen, bei der das Mischen auf einem Seitenextruder durchgeführt wird und anschließend die gemischte Schmelze im Hauptextruder imidiert wird.

Unter den Polymerisaten auf Basis von C₁-C₂₀-Alkylestern der (Meth)Acrylsäure sind sowohl Homo- als auch Copolymere zu verstehen, wobei die Copolymeren noch andere ethylenisch ungesättigte Comonomere enthalten können.

Als C₁-C₂₀-Alkylester der Methacrylsäure kommen bevorzugt die C₁-C₄-Alkylester wie Methylmethacrylat ("MMA"), Ethylmethacrylat, Propylmethacrylat, n-Butylmethacrylat, Isobutylmethacrylat und tert.-Butylmethacrylat in Betracht, wobei Methylmethacrylat besonders bevorzugt ist, sowie Mischungen dieser Monomeren.

Als C₁-C₂₀-Alkylester der Acrylsäure verwendet man bevorzugt die C₁-C₄-Alkylester wie Methylacrylat ("MA"), Ethylacrylat, Propylacrylat, n-Butylacrylat, Isobutylacrylat und tert.-Butylacrylat, wobei Methylacrylat besonders bevorzugt ist, sowie Mischungen dieser Monomeren.

Als ethylenisch ungesättigte Comonomere kann man Acrylsäure, Methacrylsäure, Maleinsäurederivate wie das Anhydrid, Imide und C₁-C₁₀-Alkylester, Itaconsäurederivate wie Imide und C₁-C₁₀-Alkylester, Acryl- und Methacrylnitril, Styrol, α-Methylstyrol, Ethylen, Propylen und Butadien sowie Mischungen davon einsetzen.

Die Polymerisate können ein- oder mehrstufig hergestellt werden, wobei bei mehrstufiger Polymerisation wenigstens die äußere Stufe Gruppen enthalten muß, die imidiert werden können.

Im allgemeinen sind die Polymerisate zu mehr als 50, bevorzugt zu mehr als 80 Gew.-% aus C₁-C₂₀-Alkylestern der Methacrylsäure und Acrylsäure aufgebaut. Als besonders vorteilhaft haben sich nach bisherigen Beobachtungen Polymerisate aus 80 bis 100 Gew.-% Methylmethacrylat und 0 bis 20 Gew.-% Methylacrylat in einem Molekulargewichtsbereich (M_{w}) von 20.000 bis 300.000 g/mol erwiesen.

Als primäres Amin, R³NH₂, verwendet man erfindungsgemäß eines ausgewählt aus der Gruppe bestehend aus Ammoniak, C₁-C₁₈-Alkylamin, C₅-C₁₂-Cycloalkylamin, C₆-C₁₀-Arylamin und C₆-C₁₀-Aryl-C₁-C₄-alkylamin, wobei die Cycloalkyl-, Aryl- und Arylalkyl-Bestandteile der Amine bis zu dreifach mit Resten ausgewählt aus der Gruppe bestehend aus C₁-C₄-Alkyl, C₁-C₄-Alkoxy und Halogen wie Fluor, Chlor und Brom substituiert sein können.

Beispielhaft seien genannt Ammoniak, Methylamin, Ethylamin, n-, i-Propylamin, n-Butylamin, 1-Methylpropylamin, 2-Methylpropylamin, 1,1-Dimethylethylamin, n-Pentylamin, 1-Methylbutylamin, 2-Methylbutylamin, 3-Methylbutylamin, 2-Dimethylpropylamin, 1-Ethylpropylamin, n-Hexylamin, n-Heptylamin, n-Octylamin, n-Nonylamin, n-Decylamin, n-Undecylamin, n-Dodecylamin, Stearylamin, Cyclopentylamin, Cyclohexylamin, Cycloheptylamin, Cyclooctylamin, Cyclododecylamin, Anilin, 2-, 3-, 4-Methylanilin, 2-, 3-, 4-Methoxyanilin, 2-, 3-, 4-Chloranilin, 2-, 3-, 4-Bromanilin, Benzylamin, Phenethylamin und Phenylpropylamin, besonders bevorzugt Cyclohexylamin.

Das Gewichtsverhältnis von eingesetztem Amin zu Acrylat-Polymer wählt man im allgemeinen im Bereich von 1:1 bis 400:1, bevorzugt von 1:1 bis 200:1.

Die Imidierung der erfindungsgemäß gemischten Schmelze führt man im allgemeinen in an sich bekannter Weise auf einem Extruder durch, dessen Reaktionszone ein Länge-zu-Durchmesser ser(L/D)-Verhältnis von 20 bis 50, bevorzugt von 30 bis 40, aufweist. Bei einem L/D-Verhältnis von mehr als 50 kommt es in der Regel aufgrund einer zu langen Verweilzeit zu einer Schädigung des Materials verbunden mit einer Gelbfärbung. Bei einem L/D-Verhältnis unter 20 erhält man im allgemeinen nur ein teilimidiertes Produkt mit einem hohen Anteil an sekundären Amid-Gruppen, die sich nachteilig auf die Schmelzviskosität und Wasseraufnahme auswirken.

Als Mischelemente werden Knetblöcke oder Zahnmischelemente zur Homogenisierung des Reaktionsgemisches verwendet.

Die Reaktionstemperatur wählt man in der Regel im Bereich von 250 bis 350, bevorzugt von 270 bis 350°C.

Die Wahl des pH-Bereiches liegt wegen des eingesetzten Ammoniaks bzw. Amins in der Regel oberhalb von 7.

Die Reaktionszeit liegt vorzugsweise im Bereich von 1 bis 20 min, bevorzugt 2 bis 10 min.

Des weiteren kann man dem Reaktionsgemisch Katalysatoren in Mengen im Bereich von 0,01 bis 10 Gew.-%, bezogen auf das eingesetzte Polymer, zur Beschleunigung der Reaktion zusetzen. Beispielhaft seien genannt
tertiäre Amine wie Tricyclohexylamin;
substituierte Guanidine wie 1,1,3,3-Tetramethylguanidin, 1,3-Diphenylguanidin;
tetrasubstituierte Alkylammoniumverbindungen wie stearylammoniumchlorid;
organische Titanverbindungen wie Tetrapropoxytitan, Tetrabutoxytitan;
organische Zinnverbindungen wie Dibutylzinnoxid, Dibutylzinndidodecanat;
aromatische Amine wie Chinolin, Isochinolin, 4-Benzylpyridin, 4-Phenylpyridin, 2-Hydroxypyridin, 1,3-, 1,4- und 2,3-Benzodiazin, 2,2'-, 2,3'- und 2,4'-Bipyridyl;
Imide wie N,N'-Dicyclohexylcarbodiimid;
sowie Antimontrioxid, Zinndioxid, Natriumamid, Natrium- und Kaliumalkoholate wie Natrium- und Kaliummethanolat, Ammoniumchlorid und Ammoniumiodid.

Die Zugabe der Katalysatoren kann vor, während oder nach dem Mischvorgang erfolgen, bevorzugt nachher.

In einer weiteren bevorzugten Ausführungsform enthält der (Haupt-)Extruder nach der Reaktionszone eine Entgasungszone, d.h. wenigstens eine Öffnung, durch die flüchtige Bestandteile und nicht polymere Reaktionsprodukte entfernt werden können. Die Entgasung kann man sowohl bei Normaldruck als auch unter vermindertem Druck (Vakuumentgasung) durchführen. Besonders vorteilhaft hat sich die Anwendung von einer Normaldruck- kombiniert mit einer Vakuumentgasung herausgestellt.

Die erfindungsgemäß hergestellten Poly(meth)acrylimide kann man nach üblichen Methoden verarbeiten, z.B. durch Spritzguß, Extrusion oder Sintern zur Herstellung von Formkörpern, Folien oder Fasern.

Das erfindungsgemäße Verfahren hat den Vorteil gegenüber bekannten Verfahren, daß die erfindungsgemäß hergestellten Poly(meth)acrylimide homogener, weniger trüb und einen verbesserten Gelbindex aufweisen, verglichen mit Poly(meth)acrylimiden, die nach einem Extruderverfahren, aus dem Stand der Technik hergestellt wurden.

### Beispiele

### Beispiele 1 und 2

Auf einem Zweiwellenextruder mit gleichlaufenden, kämmenden Schnecken (ZSK-30; W&P) wurden kontinuierlich 20 kg PMMA (aus 99 Gew.-% MMA und 1 Gew.-% MA mit einem mittleren Molekulargewicht (Mₙ) von 115 000 g/mol) pro Stunde eindosiert. Die eingestellte Gehäusetemperatur betrug dabei den in Tabelle 1 angegebenen Wert. Nachdem das Polymerisat aufgeschmolzen war, wurden mit Hilfe einer Kolbendosierpumpe kontinuierlich 10 kg Cyclohexylamin pro Stunde in den Extruder gepumpt, und zwar derart, daß die Schmelze und das Amin durch eingebaute Zahnscheibenelemente vermischt wurden. Das Amin/PMMA-Gemisch wurde dann in den eigentlichen Reaktionsextruder (ZSK-40; W&P) gefördert und dort auf eine Temperatur von 270°C erhitzt. Das L/D-Verhältnis der Reaktionszone betrug 40. Anschließend wurde das Reaktionsgemisch mit Hilfe einer Normaldruck- und einer Vakuumentgasungsöffnung entgast sowie anschließend granuliert.

Die Ergebnisse der Qualitätsprüfungen sind der Tabelle zu entnehmen.

**Tabelle**

| Bsp. | Misch-Temp. [°C] | Trübung | Yᵢ-Gelbindex |
|---|---|---|---|
| 1 | 230 | 1,8 | 1,3 |
| 2 | 240 | 1,9 | 1,4 |
| Vgl. Bsp. 1 | 270 | 3,1 | 2,9 |

### Vergleichsbeispiele 2 bis 4

Die nachfolgenden Versuche wurden auf der gleichen Extruderanordnung wie bei den vorigen Beispielen beschrieben vorgenommen, mit der Ausnahme, daß die Zahnscheibenelemente für die Amineinmischung durch neutrale, nicht fördernde und nicht mischende Schneckenelemente ersetzt wurden.

| Vgl. Bsp. | Misch-Temp. [°C] | Trübung | Yᵢ-Gelbindex |
|---|---|---|---|
| 2 | 230 | 3,9 | 2,8 |
| 3 | 240 | 4,1 | 3,1 |
| 4 | 270 | 4,7 | 4,1 |

Der Yᵢ-Gelbindex wurde gemäß DIN 6 167 an Rundscheiben (φ = 80 mm, d = 6 mm) bestimmt.

Die Trübung wurde gemäß DIN 5 036 Teil 3 bestimmt.

## Patentansprüche

1. Verfahren zur Herstellung eines Polymerisats, enthaltend im wesentlichen Einheiten der Formel I 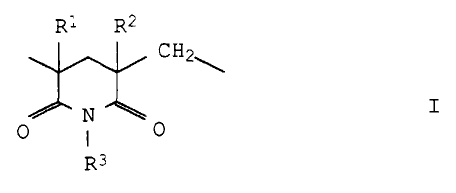 in der
R¹ und R² für Wasserstoff oder Methyl stehen und
R³ Wasserstoff, C₁-C₁₈-Alkyl, C₅-C₁₂-Cycloalkyl, C₆-C₁₀-Aryl, C₆-C₁₀-Aryl-C₁-C₄-alkyl bedeutet, wobei diese Reste mit Ausnahme der C₁-C₁₈-Alkylreste bis zu dreifach mit Resten ausgewählt aus der Gruppe bestehend aus C₁-C₄-Alkyl, C₁-C₄-Alkoxy und Halogen substituiert sein können,
durch Umsetzen eines Polymeren auf Basis von C₁-C₂₀-Alkylestern der Acrylsäure, Methacrylsäure oder Mischungen davon mit Ammoniak oder einem primären Amin in einem Extruder, dadurch gekennzeichnet, daß man den Ammoniak oder das primäre Amin mit einer Schmelze des umzusetzenden Polymeren bei einer Temperatur von unterhalb 250°C in einem Extruder mit Hilfe von Knetblöcken oder Zahnmischelementen intensiv unter Homogenisierung vermischt, bevor man die Imidierung bei einer Temperatur im Bereich von 250-350°C durchführt.

2. Verfahren zur Herstellung eines Polymerisates nach Anspruch 1, dadurch gekennzeichnet, daß man Zahnscheibenelemente als Zahnmischelemente verwendet.

3. Verfahren zur Herstellung eines Polymerisates nach Anspruch 1 oder 2, dadurch gekennzeichnet, daß man den Ammoniak oder das primäre Amin mit der Schmelze des umzusetzenden Polymeren bei einer Temperatur von 220 bis 230°C vermischt.

4. Verfahren zur Herstellung eines Polymerisates nach einem der Ansprüche 1 bis 3, dadurch gekennzeichnet, daß man die Imidierung in einer Reaktionszone durchführt, deren Längen-zu-Durchmesser-Verhältnis im Bereich von 20 bis 50 liegt.

5. Verfahren zur Herstellung eines Polymerisates nach den Ansprüchen 1 bis 4, dadurch gekennzeichnet, daß man am Ende der Imidierungszone niedermolekulare Stoffe durch mindestens eine Entgasungsöffnung aus der Reaktionsmischung entfernt.

## Claims

1. A process for preparing a polymer, essentially comprising units of the formula I 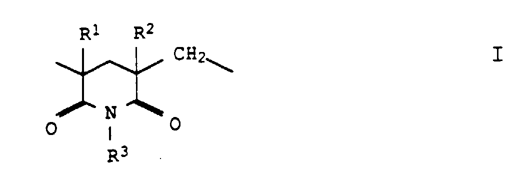 in which
R¹ and R² are hydrogen or methyl and
R³ is hydrogen, C₁-C₁₈-alkyl, C₅-C₁₂-cycloalkyl, C₆-C₁₀-aryl or C₆-C₁₀-aryl-C₁-C₄-alkyl, it being possible for these radicals, with the exception of the C₁-C₁₈-alkyl radicals, to be up to trisubstituted by radicals selected from the group consisting of C₁-C₄-alkyl, C₁-C₄-alkoxy and halogen, by reacting a polymer based on C₁-C₂₀-alkyl esters of acrylic acid, methacrylic acid or mixtures thereof with ammonia or a primary amine in an extruder, which comprises mixing the ammonia or the primary amine intensively in an extruder with a melt of the polymer to be reacted, at below 250°C, with homogenization before the imidation is carried out in the range of from 250 to 350°C with the aid of kneading blocks or toothed mixing elements.

2. A process for preparing a polymer as claimed in claim 1, wherein toothed disk elements are used as the toothed mixing elements.

3. A process for preparing a polymer as claimed in claim 1 or 2, wherein the ammonia or the primary amine is mixed at from 220 to 230°C with the melt of the polymer to be reacted.

4. A process for preparing a polymer as claimed in any of claims 1 to 3, wherein the imidation is carried out in a reaction zone which has a length-to-diameter ratio in the range of from 20 to 50.

5. A process for preparing a polymer as claimed in any of claims 1 to 4, wherein low molecular weight substances are removed from the reaction mixture at the end of the imidation zone through at least one vent.

## Revendications

1. Procédé de préparation d'un polymère contenant essentiellement des motifs de formule I 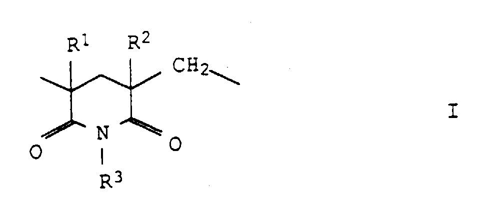 dans laquelle
R¹ et R² sont mis pour des atomes d'hydrogène ou des restes méthyle et
R³ représente un atome d'hydrogène ou un reste alkyle en C₁-C₁₈, cycloalkyle en C₅-C₁₂, aryle en C₆-C₁₀, (aryl en C₆-C₁₂)alkyle en C₁-C₄, ces restes, à l'exception des restes alkyle en C₁-C₁₈, pouvant être substitués jusqu'à trois fois par des restes choisis dans le groupe constitué par les restes alkyle en C₁-C₄, alcoxy en C₁-C₄ et les atomes d'halogène,
par réaction d'un polymère à base d'esters alkyliques en C₁-C₂₀ de l'acide acrylique, de l'acide méthacrylique ou de mélanges de ceux-ci, avec de l'ammoniac ou une amine primaire dans une extrudeuse, caractérisé en ce que l'on mélange énergiquement et de façon homogène l'ammoniac ou l'amine primaire avec une masse fondue du polymère à faire réagir, à une température inférieure à 250°C dans une extrudeuse à l'aide de blocs pétrisseurs ou d'éléments mélangeurs à dents, avant de procéder à l'imidation à une température comprise entre 250 et 350°C.

2. Procédé de préparation d'un polymère selon la revendication 1, caractérisé en ce que l'on utilise, comme éléments mélangeurs à dents, des éléments à disque denté.

3. Procédé de préparation d'un polymère selon la revendication 1 ou 2, caractérisé en ce que l'on mélange l'ammoniac ou l'amine primaire avec la masse fondue du polymère à faire réagir à une température de 220 à 230°C.

4. Procédé de préparation d'un polymère selon l'une quelconque des revendications 1 à 3, caractérisé en ce que l'on procède à l'imidation dans une zone de réaction dont le rapport longueur/diamètre se situe dans la fourchette de 20 à 50.

5. Procédé de préparation d'un polymère selon l'une quelconque des revendications 1 à 4, caractérisé en ce qu'à l'extrémité de la zone d'imidation, on élimine du mélange réactionnel les substances de bas poids moléculaire à travers au moins une ouverture de dégazage.
